# FASCICULE DE BREVET EUROPEEN

(11) **EP 3 665 707 B1**
(45) Date de publication et mention de la délivrance du brevet: **04.08.2021**
(21) Numéro de dépôt: 18800712.4
(22) Date de dépôt: 22.10.2018
(51) Int. Cl.: G21C 21/02, C01G 43/01, C01G 56/00, G21C 3/62, G21C 19/46

(54) **PROCEDE DE PREPARATION D'UNE POUDRE A BASE D'OXYDE(S) COMPRENANT DE L'URANIUM ET DU PLUTONIUM ET UTILISATION DE CETTE POUDRE POUR LA FABRICATION D'UN COMBUSTIBLE A BASE D'URANIUM ET DE PLUTONIUM**
VERFAHREN ZUR HERSTELLUNG EINES PULVERS AUF DER BASIS VON OXID(EN) MIT URAN UND PLUTONIUM UND VERWENDUNG DIESES PULVERS ZUR HERSTELLUNG EINES BRENNSTOFFES AUF URAN- UND PLUTONIUMBASIS
METHOD FOR PREPARING A POWDER BASED ON OXIDE(S) COMPRISING URANIUM AND PLUTONIUM AND USE OF THIS POWDER FOR THE MANUFACTURE OF A FUEL BASED ON URANIUM AND PLUTONIUM

(30) Priorité: 23.10.2017 FR 1759999
(43) Date de publication de la demande: 17.06.2020
(73) Titulaire: Commissariat à l'énergie atomique et aux énergies alternatives, 75015 Paris (FR)
(72) Inventeur: DELAHAYE, Thibaud, 30330 Tresques (FR); LETURCQ, Gilles, 84850 Camaret (FR); WELCOMME, Eléonore, 84270 Vedene (FR)
(74) Mandataire: Brevalex
(86) Numéro de dépôt international: PCT/FR2018/052621
(87) Numéro de publication internationale: WO 2019/081840

(56) Documents cités:
- WO-A1-2013/026851
- WO-A1-2015/059188

## Description

### DOMAINE TECHNIQUE

La présente invention a trait à un procédé de préparation d'une poudre d'oxyde(s) comprenant de l'uranium et du plutonium, cette poudre pouvant être utilisée pour la conception de combustibles nucléaires mixtes à base d'uranium et de plutonium et, plus spécifiquement, d'une solution solide d'uranium et de plutonium, ces combustibles étant désignés sous la dénomination de combustibles MOX pouvant répondre à la formule U₁₋ₓPuₓO_{2±δ} avec 0 <x< 1 et 0 ≤ δ ≤ 0,1.

Différentes compositions de combustibles MOX peuvent être visées en fonction du réacteur, dans lequel le combustible est destiné à être utilisé. Ainsi, pour les réacteurs de génération 3 de type REP (REP étant l'acronyme pour désigner les réacteurs à eau pressurisée), les combustibles MOX utilisés comportent, généralement, une teneur en plutonium de 8% atomique pour 92% atomique d'uranium, tandis que, pour les réacteurs de génération 4 de type RNR (RNR étant l'abréviation pour désigner les réacteurs à neutrons rapides), les combustibles MOX utilisés présentent, généralement, une teneur en plutonium bien plus élevée, puisqu'elle peut aller jusqu'aux alentours de 30% atomique. Cette proportion élevée de plutonium place les réacteurs de génération 4 comme une solution industrielle possible pour faire face, dans le futur, aux baisses des ressources naturelles en uranium avec toutefois la nécessité d'augmenter les rendements de production des combustibles MOX présentant de telles teneurs en plutonium.

Actuellement, la préparation de combustibles MOX s'inscrit dans le cadre du recyclage des combustibles usés, ce qui suppose, en premier lieu, une étape de dissolution des combustibles usés dans une solution acide (spécifiquement, une solution d'acide nitrique) suivie d'étapes multiples en amont des étapes de mise en forme et de fabrication des pastilles de combustibles MOX destinées à l'utilisation. Plus spécifiquement, il est procédé, à partir des flux d'uranium et de plutonium issus de la dissolution des combustibles usés, à la préparation de précurseurs solides divisés par la mise en œuvre des opérations principales suivantes :
- une opération de co-précipitation oxalique quantitative de l'uranium et du plutonium présents dans les flux ;
- une opération de séparation liquide/solide, de sorte à isoler le précipité d'oxalate d'uranium et de plutonium ; et
- une opération de traitement thermique pour convertir le précipité en un solide divisé d'oxyde d'uranium et de plutonium, lequel pourra être ensuite utilisé pour la fabrication de pastilles de combustible MOX, comme décrit dans Coordination Chemistry Reviews, 1, 2014, 266-267.

Si ce type de procédé de synthèse de précurseurs est adapté pour la fabrication de combustibles MOX destinés à une utilisation dans des réacteurs de génération 3 du type REP, il devrait nécessiter une amélioration significative afin d'atteindre de meilleurs rendements de fabrication (notamment en termes d'incorporation de plutonium) pour être utilisé pour la fabrication de combustibles MOX destinés à des réacteurs de génération 4.

Par ailleurs, dans l'optique de la conception de combustibles MOX pour des réacteurs de génération 4, les procédés de synthèse devraient répondre, en premier lieu, à une gestion de flux de matière de plus en plus importants, notamment en plutonium. Ainsi, si un parc de réacteurs produisant 400 TWh/an est pris pour exemple, le passage des réacteurs de génération 3 aux réacteurs de génération 4 impliquerait de traiter un flux de plutonium multiplié par un facteur proche de 10. Les procédés développés devront donc être quantitatifs et, si possible, continus. En second lieu, du fait de la nécessité d'incorporer davantage de plutonium dans le combustible, les procédés devront être les plus directs possibles et, au mieux, ne pas nécessiter le recours à une multitude d'étapes, telles que des étapes d'ajustement valenciel, des étapes de séparation solide/liquide, des étapes de concentration. Qui plus est, les procédés, tout en permettant l'obtention des précurseurs les plus adaptés à une mise en forme sous forme de pastilles, devront limiter les étapes de formulation préalables, telles que, par exemple, les étapes de granulation, de désagglomération, d'ajustement de la surface spécifique. Enfin, les procédés devraient être, de préférence, non-proliférant avec des flux d'uranium et de plutonium toujours associés.

Comme évoqué ci-dessus, les procédés de préparation de combustibles mixtes actuels sont essentiellement basés sur la chimie des oxalates d'uranium et de plutonium impliquant avant l'étape de conversion thermique des étapes pénalisantes en termes de rendement telles l'étape de séparation solide/liquide pour récupérer le précipité d'oxalates voire d'autres étapes, telles qu'une étape d'ajustement valenciel des actinides en solution, une étape de concentration.

Aussi, au vu de ce qui existe et en vue d'une transition progressive vers des réacteurs de génération 4, les auteurs de la présente invention se sont fixé pour but de mettre au point un procédé de préparation de précurseurs du type poudre pour la fabrication de combustibles à base d'oxyde(s) d'uranium et de plutonium qui permette de surmonter les inconvénients susmentionnés et plus spécifiquement, qui présentent notamment les caractéristiques suivantes :
- la possibilité d'accéder à un large panel de teneurs en plutonium, ce qui permet d'envisager l'obtention de combustibles utilisables tant pour les réacteurs de génération 3 que les réacteurs de génération 4 ;
- des étapes non pénalisantes pour le rendement d'obtention des précurseurs du type poudre ;
- un nombre d'étapes plus limité que les procédés mis en œuvre classiquement ;
- la possibilité de permettre un multirecyclage du plutonium par exemple, celui issu de combustibles usés de type MOX, du fait de la grande flexibilité du procédé de par ses étapes mises en jeu ;
- un procédé robuste présentant une grande flexibilité en termes d'entrants mais également de produits finaux obtenus.

### EXPOSÉ DE L'INVENTION

Ainsi, l'invention a trait à un procédé de préparation d'une poudre à base d'oxyde(s) comprenant de l'uranium et du plutonium comprenant les étapes suivantes :
a) une étape d'ajout d'au moins un monomère à une solution aqueuse comprenant des ions nitrates et comprenant de l'uranium et du plutonium, dans laquelle ledit monomère est, avantageusement, le ou les monomères comprenant au moins un groupe éthylénique et au moins un groupe polaire apte à former des liaisons hydrogène ;
b) une étape d'obtention d'un gel piégeant ladite solution aqueuse par polymérisation du ou des monomères ajoutés en a) ;
c) une étape d'obtention d'un xérogel comprenant des nitrates d'uranium et de plutonium par déshydratation du gel obtenu en b) ;
d) une étape d'obtention de ladite poudre par traitement thermique du xérogel obtenu en c).

Avant d'entrer plus en détail dans la description de cette invention, nous précisons les définitions suivantes.

Par monomère, on entend, classiquement, dans ce qui précède et ce qui suit, un composé apte à réagir au cours d'une réaction de polymérisation pour former un polymère (qui sera, dans le cadre de cette invention, le matériau constitutif du gel, qui piège la solution aqueuse), le polymère comprenant ainsi un motif répétitif, c'est-à-dire un groupe organique bivalent issu directement de la réaction du monomère.

Par gel, on entend, classiquement, dans ce qui précède et ce qui suit, un matériau constitué du ou des polymères issu(s) de la polymérisation du ou des monomères susmentionnés, dans lequel est retenue une phase aqueuse, qui correspond, dans notre cas, à la solution aqueuse comprenant des ions nitrates et comprenant de l'uranium et du plutonium.

Par xérogel, on entend, classiquement dans ce qui précède et ce qui suit, un matériau constitué du ou des polymères issu(s) de la polymérisation du ou des monomères susmentionnés, dans lequel l'eau de la solution aqueuse a été éliminée par séchage ne laissant ainsi subsister plus que des nitrates d'uranium et de plutonium piégés au sein du xérogel.

Le procédé de l'invention comprend, en premier lieu, une étape d'ajout d'au moins un monomère à une solution aqueuse comprenant des ions nitrates et comprenant de l'uranium et du plutonium.

Plus précisément, la solution aqueuse comprenant des ions nitrates et comprenant l'uranium et du plutonium est, avantageusement, une solution comprenant de l'uranium à son degré d'oxydation VI (pouvant être symbolisé par U^{+VI}) et du plutonium à son degré d'oxydation IV (pouvant être symbolisé par Pu^{+IV}) et, encore plus spécifiquement, une solution comprenant du U^{+VI} sous forme de nitrate d'uranyle UO₂(NO₃)₂ et du Pu^{+IV} sous forme de nitrate de plutonium (IV) Pu(NO₃)₄. En outre, la solution peut être une solution nitrique (c'est-à-dire une solution aqueuse d'acide nitrique).

Cette solution nitrique peut être issue directement du retraitement d'un combustible usé comprenant les opérations générales suivantes :
- une opération de dissolution du combustible usé dans de l'acide nitrique ;
- une opération d'extraction liquide/liquide pour isoler la solution nitrique comprenant l'uranium et le plutonium prête à la mise en œuvre de l'étape a).

De ce fait, le procédé de l'invention permet d'entretenir un lien direct avec les opérations de recyclage d'un combustible usé.

En outre, selon la nature de la poudre souhaitée à l'issue du procédé, la solution nitrique issue directement du retraitement d'un combustible usé peut être soumise, avant utilisation dans le cadre de l'étape a), à un ajustement de sa composition chimique, par exemple, concernant le rapport U/Pu et/ou l'isotopie de la composition.

Avantageusement, le ou les monomères ajoutés au cours de l'étape a) comprennent au moins un groupe éthylénique (constituant le groupe de polymérisation) et au moins un groupe polaire apte à former des liaisons hydrogène. Ainsi, une fois polymérisé(s), le produit résultant (à savoir un polymère) sera apte à emmagasiner de l'eau par formation de liaisons hydrogène entre celle-ci et le ou les groupes polaires du ou des motifs répétitifs issus de la polymérisation du ou des monomères.

De manière plus spécifique, le ou les monomères ajoutés au cours de l'étape a), comprennent au moins un groupe éthylénique et au moins un groupe comportant un ou plusieurs atomes d'hydrogène liés à des atomes plus électronégatifs que l'hydrogène, tels que des atomes d'azote, des atomes d'oxygène.

Encore plus spécifiquement, le ou les monomères comprennent au moins un groupe éthylénique et au moins un groupe choisi parmi les groupes amides, les groupes -OH, les groupes carboxyliques, les groupes carboxylates et/ou les groupes esters.

A titre d'exemples, le ou les monomères peuvent être choisis parmi les monomères acryliques, tels que l'acide acrylique, les monomères méthacryliques, les monomères acrylates (et plus particulièrement, les monomères acrylates d'alkyle), les monomères méthacrylates (et plus particulièrement, les monomères méthacrylates d'alkyle), les monomères acrylamides, les monomères *bis*(acrylamides), les monomères époxydes et les mélanges de ceux-ci.

Au cours de l'étape a), il peut être ajouté un seul monomère ou un mélange de monomères, par exemple, des types de ceux mentionnés ci-dessus.

Lorsqu'il s'agit d'un mélange de monomères, celui-ci peut consister, plus précisément en un monomère comprenant un seul groupe polymérisable, par exemple, un monomère acrylique, tel que l'acide acrylique et un monomère comprenant deux groupes polymérisables, par exemple un monomère *bis*(acrylamide), ce dernier du fait de la présence de deux groupes polymérisables assurant également le rôle d'agent de réticulation. A titre indicatif, le mélange de monomères peut consister en de l'acide acrylique et en du N,N'-méthylène-*bis*(acrylamide).

Hormis les caractéristiques mentionnées ci-dessus, qui peuvent dicter le choix du ou des monomères en fonction de la polymérisation souhaitée (par exemple, une polymérisation radicalaire ou une polymérisation par étapes comme la polycondensation), d'autres critères peuvent présider au choix du ou des monomères à ajouter lors de l'étape a) pour former ultérieurement un gel.

Parmi ces critères, la notion de stabilité du ou des monomères vis-à-vis de la solution aqueuse et éventuellement du phénomène de radiolyse α induit par la présence éventuelle de certains radioéléments émetteurs α peut être un critère de choix pour le ou les monomères. En effet, il importe d'éviter une gélification prématurée ou voire une non-gélification de la solution aqueuse mais aussi la génération de gaz présentant des risques d'explosivité (H₂, CH₄, etc.) au-delà de certaines concentrations. De plus, en cas d'arrêt de la mise en œuvre du procédé en conditions accidentelles ou programmées, il faut pouvoir également éviter un vieillissement du gel par radiolyse qui pourrait empêcher la reprise de la production ou générer là encore des gaz présentant des risques d'explosivité.

En outre, dans le choix du ou des monomères à ajouter lors de l'étape a) peuvent présider les critères suivants :
- les propriétés physico-chimiques du produit final recherché, à savoir la poudre, en termes, par exemple, de morphologie, de microstructure de taux d'agglomération ;
- la viscosité souhaitée pour le gel issu de la polymérisation du ou des monomères, la notion de viscosité pouvant être un critère de choix en fonction de la nature du procédé mis en œuvre ; par exemple, un procédé continu faisant intervenir des filières d'écoulement s'accommode aisément avec une viscosité faible du gel obtenu ;
- le respect de la réglementation Reach concernant la toxicité du ou des monomères utilisés et l'absence de génération de gaz lors de la dégradation thermique des polymères issus de la polymérisation du ou des monomères ;
- l'aptitude des polymères issus de la polymérisation du ou des monomères à être dégradés thermiquement lors de l'étape de traitement thermique sans laisser d'impuretés résiduelles dans la poudre finale, dont les teneurs pourraient être rédhibitoires pour les traitements ultérieurs de la poudre sous forme de pastilles (notamment les étapes de mise en forme/frittage/densification) et l'utilisation de ces pastilles comme combustibles ;
- leur disponibilité et leur coût.

Dans certains cas, le ou les monomères ajoutés lors de l'étape a) peuvent également remplir le rôle d'agent complexant de l'uranium et/ou du plutonium présents dans ladite solution, sous réserve, bien entendu, que le ou les monomères comprennent des groupes aptes à complexer l'uranium et/ou le plutonium.

Par ailleurs, il peut être ajouté à la solution aqueuse, de préférence, avant l'ajout du ou des monomères, au moins un agent complexant de l'uranium et/ou du plutonium présents dans ladite solution, le ou lesdits agents complexant étant distincts du ou des monomères de l'étape a), le rôle de cet agent pouvant être, à part la complexation, d'éviter un phénomène de précipitation de l'uranium et/ou du plutonium avant la mise en œuvre de l'étape de gélification.

On précise que, par agent complexant, on entend un composé comprenant au moins un groupe fonctionnel apte à complexer l'uranium et/ou le plutonium présent dans la solution aqueuse, ce qui signifie, en d'autres termes, que l'uranium et/ou le plutonium, au contact de cet agent, sont aptes à se lier au groupe fonctionnel susmentionné en formant une liaison de coordination moyennant le partage d'un doublet libre d'un hétéroatome présent au niveau de ce groupe et/ou d'une charge négative portée par un hétéroatome présent au niveau de ce groupe avec une orbitale vide de l'uranium et/ou du plutonium.

Ledit hétéroatome porteur d'un doublet libre peut être un atome d'oxygène, un atome d'azote ou un atome de soufre et des combinaisons de ceux-ci, des groupes fonctionnels comprenant de tels hétéroatomes pouvant être un groupe alcool (à savoir, un groupe -OH), un groupe amine, un groupe éther, un groupe ester (à savoir, un groupe -COO-), un groupe carboxylique ou un groupe carboxylate.

A titre d'exemples d'agents complexants, il peut être cité :
- un composé comprenant au moins un groupe carboxylique, tel que l'acide citrique ;
- un composé comprenant au moins un groupe amine, tel que l'urée ;
- un composé comprenant au moins un groupe amine et au moins un groupe carboxylique, tel que l'EDTA (abréviation désignant le composé acide éthylènediaminetétraacétique) ou le DTPA (abréviation désignant le composé acide diéthylènetriaminepentaacétique).

Après l'ajout du ou des monomères et éventuellement du ou des agents complexants, le procédé de l'invention comprend une étape de gélification de la solution issue de l'étape a) par polymérisation du ou des monomères ajoutés lors de cette étape, moyennant quoi il se forme un gel piégeant la solution aqueuse comprenant l'uranium et le plutonium sous forme complexée ou non (selon que le ou les monomères comprennent au moins un groupe complexant et/ou qu'il a été procédé préalablement à l'ajout d'un agent complexant).

Pour engendrer la polymérisation du ou des monomères ajoutés en a), plusieurs voies peuvent être envisagées :
- une voie thermique consistant à chauffer la solution pour amorcer la polymérisation et, par voie de conséquence, la gélification (l'étape pouvant être ainsi qualifiée de thermo-gélification) ;
- une voie consistant à soumettre la solution à un rayonnement UV pour également amorcer la polymérisation ;
- une voie consistant à soumettre la solution à un rayonnement γ pour également amorcer la polymérisation ;
- une voie consistant à ajouter à la solution un initiateur de polymérisation tel que, par exemple, de l'eau oxygénée ou un mélange eau oxygénée/acide ascorbique.

Il n'est pas exclu qu'une combinaison de ces différentes voies puisse être utilisée, telle que la voie thermique associée à la voie consistant à ajouter à la solution un initiateur de polymérisation.

Une fois le gel obtenu, il est soumis à une étape de déshydratation, moyennant quoi il se forme un xérogel (à savoir, un matériau poreux sec dont le squelette est formé des polymères formés à l'étape précédente) et, de manière concomitante, une précipitation des nitrates d'uranium et de plutonium au sein du xérogel ainsi formé.

Cette étape de déshydratation peut être mise en œuvre en plaçant le gel dans une étuve ou encore dans un four à microondes.

Enfin, le xérogel est soumis à une étape de traitement thermique du xérogel obtenu en c) pour obtenir la poudre objet du procédé de l'invention.

Cette étape de traitement thermique peut consister en une opération de calcination sous atmosphère oxydante, au cours de laquelle le matériau organique du xérogel est dégradé thermiquement (l'opération pouvant être ainsi qualifiée en partie de déliantage) et les nitrates d'uranium et de plutonium sont convertis en oxyde(s) d'uranium et de plutonium. Les choix de la température et de la durée de calcination sont fixés en fonction de la nature du xérogel et des propriétés physico-chimiques souhaitées pour l'oxyde ou le mélange d'oxydes final. La température de calcination est typiquement comprise entre 400 et 1400°C et, plus particulièrement, entre 500 et 1200°C. Cette opération conduit principalement au relâchement gazeux de CO₂, CO, H₂O voire de CH₄ par dégradation thermique du matériau constitutif du xérogel mais en fonction de la nature de l'atmosphère de calcination, différents gaz en différentes quantités peuvent être générés. Quant aux nitrates, ils sont convertis thermiquement en oxydes et en fonction de leur nature peuvent interagir pour former des solutions solides partielles ou totales. Ainsi, dans le cas de l'uranium et du plutonium, il est possible de former sous atmosphère oxydante un mélange d'U₃O₈ et de PuO₂, l'uranium contenu dans l'U₃O8 pouvant être partiellement substitué par le plutonium. La nature et la proportion des phases formées dépendent de la température de la calcination et de l'atmosphère utilisées.

Après l'opération de calcination sous atmosphère oxydante mentionnée ci-dessus, il peut être effectué, en outre, une opération de traitement thermique additionnel notamment si l'on souhaite obtenir non plus un mélange d'oxydes mais une solution solide d'oxyde d'uranium et de plutonium, par exemple, de formule U₁₋ₓPu_{X}O_{2±δ} (avec 0 <x< 1 et 0 ≤ δ ≤ 0,1). Cette opération peut consister ainsi en une opération de calcination réalisée sous atmosphère réductrice. Les conditions de calcination (cycle thermique / atmosphère(s)) peuvent être définies en fonction de l'obtention ou non de la solution solide mais aussi des caractéristiques finales souhaitées pour la poudre (surface spécifique, granulométrie, densité tassée, etc.). Ce traitement thermique peut être dissocié du traitement de déliantage / conversion ou être réalisé de manière successive ou en série.

L'étape de traitement thermique d) peut être précédée d'une étape de broyage du xérogel obtenu de sorte à le transformer en poudre, l'étape de traitement thermique se déroulant ainsi sur la poudre issue de l'étape de broyage.

La poudre obtenue à l'issue du procédé de l'invention est une poudre à base d'oxyde(s) d'uranium et de plutonium, ce qui signifie qu'elle peut comporter :
- un mélange d'oxyde d'uranium (par exemple, U₃O₈) et d'oxyde de plutonium (par exemple, PuO₂) ; et/ou
- une solution solide d'oxyde d'uranium et de plutonium de formule U₁₋ₓPu_{X}O_{2±δ} avec 0 <x< 1 et 0 ≤ δ ≤ 0,1.

Il n'est pas exclu que, dans le mélange d'oxyde d'uranium et d'oxyde de plutonium susmentionné, une partie de l'uranium de l'oxyde d'uranium soit substitué par du plutonium et vice versa.

La poudre obtenue conformément au procédé de l'invention est une composition très active, particulièrement adaptée à l'obtention d'un combustible nucléaire, et en particulier, à l'obtention d'un combustible nucléaire du type MOX comme mentionné plus haut.

Ainsi l'invention a trait également à un procédé de préparation d'un combustible compacté, par exemple sous forme de pastilles, comprenant :
e) une étape de mise en œuvre du procédé de préparation tel que défini ci-dessus ;
f) une étape de compactage de ladite poudre obtenue en e).

Ainsi, la poudre obtenue selon le procédé de l'invention peut être utilisée telle quelle mais il n'est pas exclu, qu'avant l'étape de compactage, elle soit amenée à subir des opérations de traitement préalables, telles qu'une opération de broyage, de granulation, d'atomisation voire de dilution (par exemple, en la mélangeant avec une poudre d'oxyde d'uranium)

L'étape de compactage peut être réalisée au moyen d'une presse, qui va appliquer une pression à la composition placée dans un moule, dont la forme correspond à la forme que l'on souhaite affecter au combustible, cette forme étant classiquement celle d'une pastille cylindrique ou annulaire.

D'autres caractéristiques apparaîtront sous un autre angle à la lecture du complément de description qui suit, lequel se rapporte à des exemples de fabrication de poudres conformes à l'invention.

Bien entendu, les exemples qui suivent ne sont donnés qu'à titre d'illustration de l'objet de l'invention et ne constituent, en aucun cas, une limitation de cet objet.

### EXPOSÉ DÉTAILLÉ DE MODES DE RÉALISATION PARTICULIERS

### EXEMPLE 1

Dans cet exemple, il est procédé à la préparation d'une poudre conformément au procédé de l'invention, cette poudre consistant en un mélange d'oxyde d'uranium U₃O₈ et d'oxyde de plutonium PuO₂.

Pour ce faire, dans un bêcher de 250 mL, une solution contenant 17 mL d'acide nitrique à 0,5 mol/L, 198,9 mg de plutonium (IV) sous forme de nitrate de plutonium (IV), 511,2 mg de nitrate d'uranium UO₂(NO₃)₂ (masse molaire de 502,73 g/mol) ainsi que 188,8 mg d'urée assurant la fonction d'agent complexant a été préparée. A cette solution, il a été ajouté 5 mL d'acide acrylique, 500 mg de N,N'-méthylène-*bis*(acrylamide). L'ensemble est placé sous agitation magnétique. La solution résultante a été portée à ébullition. Dès que l'ébullition a été atteinte, une goutte d'eau oxygénée a été ajoutée dans la solution, qui devient grise puis une seconde goutte d'eau oxygénée a été ajoutée à la solution conduisant à la formation du gel avec prise en masse de la solution. L'agitateur a alors été retiré et le gel chauffé sur une plaque chauffante jusqu'à déshydratation. Au bout de 45 minutes, un xérogel est obtenu. Le xérogel a ensuite été broyé puis traité thermiquement sous air reconstitué jusqu'à 800°C pendant 2 heures. A l'issue de ce traitement, 483 mg de poudre sont obtenus. L'analyse de cette poudre par diffraction des rayons X sur poudre témoigne de la présence de deux phases U₃O₈ / PuO₂. Ce mélange de phases peut être utilisé tel que comme précurseur de fabrication de combustible MOX.

### EXEMPLE 2

Dans cet exemple, il est procédé à la préparation d'une poudre conformément au procédé de l'invention, cette poudre consistant en une solution solide comprenant une unique phase de formule U_{0,55}Pu_{0,45}O_{2,01}.

Pour ce faire, dans un bécher de 250 mL, une solution contenant 17 mL d'acide nitrique à 0,5 mol/L, 198,9 mg de plutonium (IV) sous forme de nitrate de plutonium (IV), 511,2 mg de nitrate UO₂(NO₃)₂ (masse molaire de 502,73 g/mol) ainsi que 188,8 mg d'urée agissant en tant qu'agent complexant a été préparée. A cette solution, il a été ajouté 5 mL d'acide acrylique, 500 mg de N,N'-méthylène-*bis*(acrylamide). L'ensemble est placé sous agitation magnétique. La solution résultante a été portée à ébullition. Dès que l'ébullition a été atteinte, une goutte d'eau oxygénée a été ajoutée dans la solution, qui est devenue grise puis une seconde goutte d'eau oxygénée a été ajoutée à la solution conduisant à la formation du gel avec prise en masse de la solution. L'agitateur a alors été retiré et le gel chauffé sur une plaque chauffante jusqu'à déshydratation. Au bout de 45 minutes, un xérogel est obtenu. Le xérogel a ensuite été broyé puis traité thermiquement sous air reconstitué jusqu'à 800°C pendant 2 heures. A l'issue de ce traitement, 483 mg de poudre sont obtenus. Cette poudre a ensuite été traitée thermiquement sous argon hydrogéné (5%) à 800°C. La poudre obtenue a été analysée par diffraction des rayons X sur poudre. Une seule phase a été mise en évidence à savoir la phase U_{0,55}Pu_{0,45}O_{2,01}. Cette poudre peut être utilisée comme précurseur de fabrication de combustible de type MOX.

## Revendications

1. Procédé de préparation d'une poudre à base d'oxyde(s) comprenant de l'uranium et du plutonium comprenant les étapes suivantes :
a) une étape d'ajout d'au moins un monomère à une solution aqueuse comprenant des ions nitrates et comprenant de l'uranium et du plutonium, le ou les monomères comprenant au moins un groupe éthylénique et au moins un groupe polaire apte à former des liaisons hydrogène ;
b) une étape d'obtention d'un gel piégeant ladite solution aqueuse par polymérisation du ou des monomères ajoutés en a) ;
c) une étape d'obtention d'un xérogel comprenant des nitrates d'uranium et de plutonium par déshydratation du gel obtenu en b) ;
d) une étape d'obtention de ladite poudre par traitement thermique du xérogel obtenu en c).

2. Procédé selon la revendication 1, dans lequel la solution aqueuse comprenant des ions nitrates et comprenant l'uranium et du plutonium est une solution comprenant de l'uranium à son degré d'oxydation VI et du plutonium à son degré d'oxydation IV.

3. Procédé selon la revendication 1 ou 2, dans lequel la solution aqueuse comprenant des ions nitrates et comprenant l'uranium et du plutonium est une solution comprenant du U^{+VI} sous forme de nitrate d'uranyle UO₂(NO₃)₂ et du Pu^{+IV} sous forme de nitrate de plutonium (IV) Pu(NO₃)₄.

4. Procédé selon l'une quelconque des revendications précédentes, dans lequel la solution aqueuse comprenant des ions nitrates et comprenant l'uranium et du plutonium est une solution nitrique issue directement du retraitement d'un combustible nucléaire usé.

5. Procédé selon l'une quelconque des revendications précédentes, dans lequel le ou les monomères ajoutés au cours de l'étape a), comprennent au moins un groupe éthylénique et au moins un groupe comportant un ou plusieurs atomes d'hydrogène liés à des atomes plus électronégatifs que l'hydrogène, tels que des atomes d'azote, des atomes d'oxygène.

6. Procédé selon l'une quelconque des revendications précédentes, dans lequel le ou les monomères ajoutés au cours de l'étape a) comprennent au moins un groupe éthylénique et au moins un groupe choisi parmi les groupes amides, les groupes -OH, les groupes carboxyliques, les groupes carboxylates et/ou les groupes esters.

7. Procédé selon l'une quelconque des revendications précédentes, dans lequel le ou les monomères ajoutés au cours de l'étape a) sont choisis parmi les monomères acryliques, les monomères méthacryliques, les monomères acrylates, les monomères méthacrylates, les monomères acrylamides, les monomères bis(acrylamides), les monomères époxydes et les mélanges de ceux-ci.

8. Procédé selon l'une quelconque des revendications précédentes, dans lequel l'ajout de l'étape a) consiste en un ajout d'un mélange de monomères.

9. Procédé selon la revendication 8, dans lequel le mélange de monomères consiste en un monomère comprenant un seul groupe polymérisable, par exemple, un monomère acrylique, tel que l'acide acrylique et un monomère comprenant deux groupes polymérisables, par exemple un monomère bis(acrylamide).

10. Procédé selon l'une quelconque des revendications précédentes, dans lequel il est ajouté à la solution aqueuse au moins un agent complexant de l'uranium et/ou du plutonium présents dans ladite solution, le ou lesdits agents complexant étant distincts du ou des monomères de l'étape a).

11. Procédé selon la revendication 10, dans lequel le ou les agents complexants sont choisis parmi les composés comprenant au moins un groupe carboxylique, les composés comprenant au moins un groupe amine, les composés comprenant au moins un groupe amine et au moins un groupe carboxylique.

12. Procédé selon l'une quelconque des revendications précédentes, dans lequel la polymérisation de l'étape b) est engendrée par les voies suivantes :
- une voie thermique consistant à chauffer la solution pour amorcer la polymérisation et, par voie de conséquence, la gélification ;
- une voie consistant à soumettre la solution à un rayonnement UV pour également amorcer la polymérisation ;
- une voie consistant à soumettre la solution à un rayonnement γ pour également amorcer la polymérisation ;
- une voie consistant à ajouter à la solution un initiateur de polymérisation tel que, par exemple, de l'eau oxygénée ou un mélange eau oxygénée/acide ascorbique ; et
- des combinaisons de ces voies.

13. Procédé selon l'une quelconque des revendications précédentes, dans lequel l'étape de traitement thermique consiste en une opération de calcination sous atmosphère oxydante.

14. Procédé selon l'une quelconque des revendications précédentes, dans lequel l'étape de traitement thermique d) est précédée d'une étape de broyage du xérogel obtenu de sorte à le transformer en poudre.

15. Procédé de préparation d'un combustible compacté comprenant :
e) une étape de mise en œuvre du procédé de préparation tel que défini selon l'une quelconque des revendications 1 à 14 ;
f) une étape de compactage de ladite poudre obtenue en e).

## Patentansprüche

1. Verfahren zur Herstellung eines Pulvers auf Oxidbasis, das Uran und Plutonium enthält, umfassend die folgenden Schritte:
a) einen Schritt der Zugabe zumindest eines Monomers zu einer wässrigen Lösung, die Nitrationen umfasst und Uran und Plutonium enthält, wobei das bzw. die Monomere zumindest eine ethylenische Gruppe und zumindest eine polare Gruppe, die Wasserstoffbindungen bilden kann, enthalten;
b) einen Schritt der Gewinnung eines Gels, das die wässrige Lösung einfängt, durch Polymerisation des bzw. der in a) zugegebenen Monomere;
c) einen Schritt der Gewinnung von Uran- und Plutoniumnitrate enthaltendem Xerogel durch Dehydratisierung des in b) gewonnen Gels;
d) einen Schritt der Gewinnung des Pulvers durch Wärmebehandlung des in c) gewonnenen Xerogels.

2. Verfahren nach Anspruch 1, wobei es sich bei der wässrigen Lösung, die Nitrationen umfasst und Uran und Plutonium enthält, um eine Lösung handelt, die Uran in seiner Oxidationsstufe VI und Plutonium in seiner Oxidationsstufe IV enthält.

3. Verfahren nach Anspruch 1 oder 2, wobei es sich bei der wässrigen Lösung, die Nitrationen umfasst und Uran und Plutonium enthält, um eine Lösung handelt, die U^{+VI} in Form von Uranylnitrat UO₂(NO₃)₂ und Pu^{+IV} in Form von Plutonium(IV)-Nitrat Pu(NO₃)₄ enthält.

4. Verfahren nach einem der vorhergehenden Ansprüche, wobei es sich bei der wässrigen Lösung, die Nitrationen umfasst und Uran und Plutonium enthält, um eine Nitratlösung handelt, die direkt aus der Wiederaufbereitung von verbrauchtem Kernbrennstoff stammt.

5. Verfahren nach einem der vorhergehenden Ansprüche, wobei das bzw. die in Schritt a) zugegebenen Monomere zumindest eine ethylenische Gruppe und zumindest eine Gruppe mit einem oder mehreren Wasserstoffatomen, die an Atome gebunden sind, die elektronegativer als Wasserstoff sind, wie Stickstoffatome, Sauerstoffatome, umfassen.

6. Verfahren nach einem der vorhergehenden Ansprüche, wobei das bzw. die in Schritt a) zugegebenen Monomere zumindest eine ethylenische Gruppe und zumindest eine Gruppe, ausgewählt aus Amidgruppen, -OH-Gruppen, Carboxylgruppen, Carboxylatgruppen und/oder Estergruppen, enthalten.

7. Verfahren nach einem der vorhergehenden Ansprüche, wobei das bzw. die in Schritt a) zugegebenen Monomere ausgewählt sind aus Acrylmonomeren, Methacrylmonomeren, Acrylatmonomeren, Methacrylatmonomeren, Acrylamidmonomeren, bis(Acrylamid)-Monomeren, Epoxidmonomeren und deren Gemischen.

8. Verfahren nach einem der vorhergehenden Ansprüche, wobei die Zugabe in Schritt a) aus einer Zugabe eines Gemischs von Monomeren besteht.

9. Verfahren nach Anspruch 8, wobei das Monomergemisch aus einem Monomer mit einer einzelnen polymerisierbaren Gruppe, beispielsweise einem Acrylmonomer, wie Acrylsäure, und einem Monomer mit zwei polymerisierbaren Gruppen, beispielsweise einem *bis*(Acrylamid)-Monomer, besteht.

10. Verfahren nach einem der vorhergehenden Ansprüche, wobei der wässrigen Lösung zumindest ein Komplexbildner für in der Lösung vorhandenes Uran und/oder Plutonium zugegeben wird, wobei der bzw. die Komplexbildner von dem bzw. den Monomeren aus Schritt a) verschieden sind.

11. Verfahren nach Anspruch 10, wobei der bzw. die Komplexbildner ausgewählt sind aus Verbindungen mit zumindest einer Carboxylgruppe, Verbindungen mit zumindest einer Aminogruppe, und Verbindungen mit zumindest einer Aminogruppe und zumindest einer Carboxylgruppe.

12. Verfahren nach einem der vorhergehenden Ansprüche, wobei die Polymerisation in Schritt b) auf folgende Wege hervorgerufen wird:
- einem thermischen Weg, der darin besteht, die Lösung zu erhitzen, um die Polymerisation und damit die Gelierung einzuleiten;
- einem Weg, der darin besteht, die Lösung einer UV-Bestrahlung zu unterziehen, um ebenfalls die Polymerisation einzuleiten;
- einem Weg, der darin besteht, die Lösung einer γ-Strahlung zu unterziehen, um ebenfalls die Polymerisation einzuleiten;
- einem Weg, der darin besteht, der Lösung einen Polymerisationsinitiator, wie beispielsweise Wasserstoffperoxid oder ein Wasserstoffperoxid/Ascorbinsäure-Gemisch, zuzugeben; und
- Kombinationen aus diesen Wegen.

13. Verfahren nach einem der vorhergehenden Ansprüche, wobei der Schritt der Wärmebehandlung aus einem Kalzinierungsvorgang unter oxidierender Atmosphäre besteht.

14. Verfahren nach einem der vorhergehenden Ansprüche, wobei dem Schritt d) der Wärmebehandlung ein Schritt des Mahlens von gewonnenem Xerogel vorausgeht, um es zu Pulver zu verarbeiten.

15. Verfahren zur Herstellung eines verdichteten Brennstoffs, umfassend:
e) einen Schritt der Durchführung des Herstellungsverfahrens nach einem der Ansprüche 1 bis 14;
f) einen Schritt des Verdichtens des in e) gewonnenen Pulvers.

## Claims

1. A method for preparing a powder based on oxide(s) comprising uranium and plutonium comprising the following steps:
a) a step of adding at least one monomer to an aqueous solution comprising nitrates ions and comprising uranium and plutonium, the monomer(s) comprising at least one ethylenic group and at least one polar group able to form hydrogen bonds;
b) a step of obtaining a gel trapping said aqueous solution by polymerising the monomer(s) added in a);
c) a step of obtaining a xerogel comprising uranium and plutonium nitrates by dehydrating the gel obtained in b);
d) a step of obtaining said powder by thermally treating the xerogel obtained in c).

2. The method according to claim 1, wherein the aqueous solution comprising nitrate ions and comprising uranium and plutonium is a solution comprising uranium at its oxidation state VI and plutonium at its oxidation state IV.

3. The method according to claim 1 or 2, wherein the aqueous solution comprising nitrate ions and comprising uranium and plutonium is a solution comprising U^{+VI} as uranyl nitrate UO₂(NO₃)₂ and Pu^{+IV} as plutonium (IV) nitrate Pu(NO₃)₄.

4. The method according to any of the preceding claims, wherein the aqueous solution comprising nitrate ions and comprising uranium and plutonium is a nitric solution coming directly from reprocessing a spent nuclear fuel.

5. The method according to any of the preceding claims, wherein the monomer(s) added during step a), comprise(s) at least one ethylenic group and at least one group including one or several hydrogen atoms bonded to more electronegative atoms than hydrogen, such as nitrogen atoms, oxygen atoms.

6. The method according to any of the preceding claims, wherein the monomer(s) added during step a) comprise(s) at least one ethylenic group and at least one group selected from amide groups, -OH groups, carboxylic groups, carboxylate groups and/or ester groups.

7. The method according to any of the preceding claims, wherein the monomer(s) added during step a) is (are) selected from acrylic monomers, methacrylic monomers, acrylate monomers, methacrylate monomers, acrylamide monomers, bis(acrylamide) monomers, epoxyde monomers and mixtures thereof.

8. The method according to any of the preceding claims, wherein adding in step a) consists in adding a mixture of monomers.

9. The method according to claim 8, wherein the mixture of monomers consists of a monomer comprising only one polymerisable group, for example, an acrylic monomer, such as acrylic acid and a monomer comprising two polymerisable groups, for example a bis(acrylamide) monomer.

10. The method according to any of the preceding claims, wherein at least one complexing agent of uranium and/or plutonium present in said solution is added to the aqueous solution, said complexing agent(s) being distinct from the monomer(s) of step a).

11. The method according to claim 10, wherein the complexing agent(s) are selected from compounds comprising at least one carboxylic group, compounds comprising at least one amine group, compounds comprising at least one amine group and at least one carboxylic group.

12. The method according to any of the preceding claims, wherein polymerising of step b) is caused by the following pathways:
- a thermal pathway consisting in heating the solution to trigger polymerisation and, as a consequence, gelling;
- a pathway consisting in subjecting the solution to UV radiation also to trigger polymerisation;
- a pathway consisting in subjecting the solution to γ radiation also to trigger polymerisation;
- a pathway consisting in adding to the solution a polymerisation initiator such as, for example, hydrogen peroxide or a hydrogen peroxide/ascorbic acid mixture; and
- combinations of these pathways.

13. The method according to any of the preceding claims, wherein the thermal treatment step consists of a calcination operation under oxidising atmosphere.

14. The method according to any of the preceding claims, wherein the thermal treatment step d) is preceded by a step of grinding the xerogel obtained so as to transform it into powder.

15. A method for preparing a compacted fuel comprising:
e) a step of implementing the preparation method such as defined according to any of claims 1 to 14;
f) a step of compacting said powder obtained in e).
